(19) Europäisches Patentamt
European Patent Office
Office européen des brevets

(11) **EP 4 325 152 A1**

(12) **EUROPEAN PATENT APPLICATION**

(43) Date of publication:
**21.02.2024 Bulletin 2024/08**

(21) Application number: **22191273.6**

(22) Date of filing: **19.08.2022**

(51) International Patent Classification (IPC):
**F27B 7/38** (2006.01)        **C04B 7/47** (2006.01)
**F27D 15/02** (2006.01)

(52) Cooperative Patent Classification (CPC):
**F27B 7/386; C04B 7/47; F27D 15/028**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Alite GmbH**
**31535 Neustadt (DE)**

(72) Inventor: **Hammerich, Jörg**
**31535 Neustadt (DE)**

(74) Representative: **Lohr, Jöstingmeier & Partner**
**Junkersstraße 3**
**82178 Puchheim/München (DE)**

(54) **CALCINED CLAY COOLER**

(57)     A calcined clay cooler 100 with a rotatably supported clay conduit having a clay conduit wall enclosing a clay conduit volume with an upstream clay inlet and a downstream clay outlet provides an improved coolant handling as well as reduced operating costs, if the clay conduit wall comprises at least one coolant channel with a channel wall enclosing a channel volume and defining a channel inlet and a channel outlet.

Fig. 1

EP 4 325 152 A1

## Description

### Field of the invention

The invention relates to the manufacture of pozzolanic or hydraulic materials for substitution of cement clinker, e.g., in Portland Cement manufacture. In more detail, the invention relates to a calcined clay cooler. The calcined clay cooler has an axis of rotation and at least one clay conduit. The clay conduit(s) may each have a clay conduit wall that encloses a clay conduit volume with an upstream clay inlet and a downstream clay outlet. The clay conduits are rotatably supported to rotate relative to the axis of rotation.

### Description of the related art

Cement clinker is an approved concrete component, but its production is associated with significant $CO_2$-emissions. To reduce the amount of released $CO_2$ per ton of concrete it has been suggested to replace at least a portion of the clinker by pozzolanic-like materials. Examples are natural pozzolan and fly ash. Further, latent hydraulic materials like ground granulated blast furnace slag have as well been suggested as a clinker replacing material. Unfortunately, the availability of these materials is limited and hence so called artificial pozzolans have been suggested. These artificial pozzolans can be manufactured by calcining clays, usually between 600°C and 800°C (see e.g., Rodrigo Fernandez, Fernando Martirena and Karen L. Scrivener: The origin of the pozzolanic activity of calcined clay minerals: A comparison between kaolinite, illite and montmorillonite; Cement and Concrete Research, Vol. 41, 2011, p113-122). Industrial scale trials have as well been reported by Tobias Danner, Reactivity of Calcined Clays, PhD-Thesis 2013, Trondheim University (ISBN 978-82-471-4552-4). Presently in industrial scale, the clays are heated ('calcined') by a clay furnace and subsequently cooled by means of calcined clay coolers. Such calcined clay coolers are rotating drums with a spray cooled drum shell. Water as coolant is sprayed on the peripheral surface of the drum (Luiz Felipe de Pinho and Roberto Campos: Claying it all on the line; World Cement, 2021, Vol. 4, p. 35 -38, see last figures), while the calcined clay is transported in the rotating drum to the cooler outlet.

These burnt clays are referred to as *"calcined clays"*, although *calcination* in its literal sense, being a thermal $CaCO_3$-decomposition, does not take place. It is assumed that that the term "calcination" is used simply because of the analogy to the cement clinker process: Limestone is rendered hydraulic by heating it above the calcination temperature and clay is rendered pozzolanic by heating it. Both materials can so to speak be 'activated' for the purpose of being used in the concrete industry. In other words, the term *calcined clays* simply refers to a clay that has been subjected to a heat treatment for rendering the clay pozzolanic and/or hydraulic.

## Summary of the invention

The problem to be solved by the invention is to improve cooling of calcined clay being provided to the cooler from a clay furnace, e.g., from a rotary clay kiln.

Solutions to the problem are described in the independent claims. The dependent claims relate to further improvements of the invention.

The calcined clay cooler has an axis of rotation and at least one clay conduit. The at least one clay conduit is preferably supported to rotate around the axis of rotation and each of the at least one clay conduit(s) may have a separate conduit wall enclosing a separate conduit volume. The at least one conduit volume is accessible by an upstream clay inlet and a downstream clay outlet. In other words, the conduit volume has a clay inlet and a clay outlet, which may be defined by corresponding openings in the conduit wall. Although a single clay conduit may be sufficient two or more clay conduits are preferred. Each of the at least one clay conduits is preferably rotatably supported to rotate relative to the same axis of rotation. Of course, the calcined clay cooler may as well comprise non-rotating components, e.g., a support base providing a rotational invariant surface (or a section thereof) supporting at least indirectly the at least one clay conduit. The at least one support base may rotatably support at least one roller, preferably at least two rollers. The at least one roller may support the at least one clay conduit, at least indirectly, for example via at least one support ring. For example, the at least one clay conduit may be attached to a support wheel. At least two support wheels may be attached to each other by a support shell. On the peripheral surface of the support shell may be a tire ring. The tire ring may be rotatably supported relative to the support based by the at least one roller, preferably by at least two rollers.

The at least one clay conduit may be a part of rotating portion of the calcined clay cooler. The rotating portion may be rotatably supported by static portion, wherein the term static only implies that not the entire static portion moves. Of course, the static portion may comprise, e.g., rollers or the like, which allow to rotatably support the rotating portion. A drive may be coupled to the rotating portion, e.g., via an optional transmission, to drive the rotating portion.

Preferably, each of the clay conduit walls comprises at least one coolant channel with a channel wall enclosing a channel volume and defining a channel inlet and a channel outlet. These coolant channels enable to effectively cool calcined clay being conveyed from the clay inlet to the clay outlet of the clay conduit, while reducing the coolant consumption and enabling to recuperate heat being removed from the calcined clay. The rotation of the clay conduit during said cooling enhances the thermal energy transfer from the calcined clay via the conduit wall to the coolant in the coolant channel. The coolant may be water or another fluid, wherein 'fluid' means that the coolant is in a fluid phase (i.e., in a liquid or gaseous phase) under the operating conditions (pressure and temperature) of the calcined clay cooler.

Preferably, the calcined clay cooler has more than just a single clay conduit, e.g., two, three, four, five, six, seven, eight, nine or ten clay conduits. Theoretically, there is no limit for the number n of clay conduits, but if we have to define a maximum for formal and/or legal grounds one may consider that 800 or 1000 clay conduits are a maximum (n ≤ 1000). The exact maximum depends on a number of factors. One factor is the diameter of the calcined clay cooler, another is the particle size of the hot clay to be cooled down, the tendency to agglomerate and as well the viscosity of the coolant. Generally, increasing the number of clay conduits increases the heat transfer surface separating the clay and the coolant and hence increases the heat transfer. On the other hand, increasing the number of conduits while maintaining the dimension of clay cooler essentially constant decreases the conduit diameter. The limit for increasing the number clay conduits is thus obtained if the free diameter of the clay conduit is so small that the burnt clay is not reliably transported by the clay conduit.

For a given total clay flow through the clay cooler, an increase of the number of clay conduits provides an increase of the surface via which a heat exchange may take place. Thus, the cooler can be dimensioned shorter (for a given calcined clay flow) while not significantly increasing the diameter of the trajectory being defined by the rotation of the clay conduit(s). Further, heat losses can be reduced (i.e., heat recuperation is improved) as well as the footprint of the calcined clay cooler. The latter is an important advantage when retrofitting existing plants. A preferred number n of conduits is in between four and eight ($4 \leq n \leq 8$). In this range, the conduits are still accessible from the inside by humans while the ratio of the peripheral surface to the volume of the clay conduits is reasonably high to promote a high heat transfer rate and a short length of the calcined clay cooler. Increasing the number n of conduits is possible and further enhances heat transfer from the calcined clay to the coolant, but has the disadvantage that manufacture, maintenance and inspection are more complicated.

The clay conduit(s) is (are) preferably arranged symmetrically with respect to the rotational axis. This symmetric arrangement minimizes static imbalances and homogenizes the torque required to rotate the rotating portion. Arranged symmetrically means in this context that in a preferred example a rotation of clay conduits around the rotational axis by $\frac{2\pi}{n} = \frac{360°}{n}$ maps the respective clay conduit onto its neighbored clay conduit, wherein n is the number of clay conduits, assuming the centers of the clay conduits have the same radial distance to the rotational axis. In practical realizations deviations from the preferred angle $\frac{2\pi}{n}$ can be expected. In case margins for these deviations have to be defined, we would suggest a margin of $\pm 30°$, $\pm 20°$, $\pm 15°$, $\pm 10°$, $\pm 5°$, $\pm 1°$, wherein smaller margins are preferred. In another example there exists for each first clay conduit at least one second clay conduit onto which it can be mapped by rotating the first clay conduit by $\frac{2\pi}{m+1}$, wherein m is the number of second clay conduits. If the number of second clay conduits is greater than 1 ($m \geq 2$) than another rotation by $\frac{2\pi}{m+1}$ maps the first clay conduit onto the position of another second clay conduit. This can be repeated until the first clay conduit is mapped onto its initial azimuthal position.

In a preferred example, the calcined clay cooler may further comprise an inlet section. The inlet section may comprise an inlet duct with a duct inlet. Further the inlet section may comprise a number of duct outlets. Each of the duct outlets is preferably in fluid communication with the duct inlet. The number of duct outlets preferably corresponds to the number clay conduits. For example, if the number of claim conduits is four, the inlet section may preferably have four duct outlets. Each of the duct outlets may be connected to the clay inlet of the corresponding clay conduit. For example, the first duct outlet may be connected to the first of the number of clay inlets, the second duct outlet may be connected to the second clay inlet and so forth. More generally, the $i^{th}$ duct outlet may be connected to the $i^{th}$ clay inlet, wherein i is an integer with $1 \leq i \leq n$ and n is the number of clay conduits. In the example of n = 2 the inlet section comprises a duct with a bifurcation connecting the duct inlet with each of the clay inlets. Or more generally the duct splits up into a number of n duct sections. The inlet section allows to distribute hot calcined clay from a single outlet of a clay kiln to the number of n clay conduits. The inner surface of the inlet section is preferably protected (and/or provided) by refractory. The inlet section is not necessarily actively cooled, but at least a portion of it may be in thermal contact with a coolant flow through an optional inlet section coolant channel.

Preferably, a connection chute having a connection chute end may extend into the duct inlet. A ring gap between the duct inlet and the chute end is preferred and may allow the inlet section to rotate relative to the connection chute. The gap may be sealed by a gasket. In addition or alternatively, the pressure in the inlet section may optionally be below ambient pressure. Thereby air may be sucked into the clay conduit(s) via the inlet section and further enhance cooling of the calcined clay.

In a particularly preferred example, the coolant channel volume is limited by the clay conduit wall and by a channel wall. During operation, this measure provides for a direct heat exchange between a coolant flowing through the coolant channel and the conduit wall, being particularly efficient. Further, the amount of wall material can be reduced, as the conduit wall serves as well to delimit the coolant channel volume. In a preferred example, the channel wall encloses at least a portion of the conduit wall, preferably the entire conduit wall. In this case, in a cross-sectional view at least a portion of the channel wall may be considered as being a ring surrounding the conduit wall. Each of these measures allows to increase the heat transfer between the coolant and the conduit wall and thus between the calcined clay and the coolant. For a given calcined clay flow the footprint of the calcined clay cooler can be further reduced, while increasing the amount of heat being recuperated.

For example, the channel wall may support the conduit wall radially and/or anti-radially, while allowing the conduit wall to float in the axial direction. Thereby, stress due to different axial heat expansions of the channel wall and the conduit wall can be reduced.

As usual, "radially" implies that a vector is pointing away from the corresponding axis. Accordingly, "anti-radially" implies that a vector points towards the corresponding axis. This means that the start point and the end point of a radial vector as well as of an anti-radial vector differ only in their distance from the corresponding axis. The azimuthal coordinates and the axial coordinates are identical. Unless otherwise defined, the corresponding axis of a conduit is the conduit axis. In case of non-straight conduits, one may consider the cross sections and consider the center of the conduit in a cross section as starting point or end point of the radial or the anti-radial direction, respectively.

Preferably, the calcined clay cooler comprises at least one support profile with a first leg, a middle leg and a second leg. As implied by the term, the middle leg is in between of the first leg and second leg and defines an offset between the first leg and the second leg. The first leg may be attached to the peripheral surface of the conduit wall or to the inner surface of the channel wall. The second leg may hold the corresponding other wall in its radial position. For example, the second leg may have a plain bearing surface contacting the respective other of the peripheral surface of the conduit wall and an inner surface of the channel wall. Thus, if the first leg is (firmly) attached to the peripheral surface of the conduit wall the second leg's plain bearing surface may contact the inner surface of the channel wall. Alternatively, the first leg may be (firmly) attached to the inner surface of the channel wall and the second leg's plain bearing surface may contact the peripheral surface of the conduit wall. The middle leg may provide for a radial offset between the surface of the first leg being (firmly) attached and the plain bearing surface. Preferably, the calcined clay cooler comprises as least three of these support profiles per clay conduit, wherein these support profiles are preferably being distributed preferably at least essentially evenly with respect to the azimuthal direction (e.g., evenly within ±45°) to thereby define the position of the corresponding clay conduit in the radial direction. The middle leg of the support profile may be of an elastic material, e.g., steel or the like, and hence compensate for different radial thermal expansions (and contractions) of the conduit wall and the channel wall, while maintaining the two walls in their relative position to each other. In an example, the two walls can be maintained at least essentially concentric while still allowing for a compensation of axial stress, e.g., due different thermal expansions.

Only to provide an example, the first leg may be attached to the corresponding wall by welding, brazing, riveting, or gluing or may even be unitary with the wall to which it is attached.

Preferably, the calcined clay cooler comprises a coolant line, wherein the coolant line extends parallel to, preferably concentric with, or more generally along the rotational axis. The coolant line may comprise a connection port in the downstream half of the calcined clay cooler and is fluidly connected with the upstream end of the at least one coolant channel. The coolant line allows to locate rotary couplings in the colder end of the calcined clay cooler, thereby reducing the thermal stress. The construction can be cheaper and at the same time more durable and easier to service.

The recuperated exergy can be increased, and the required length of the calcined clay cooler can be minimized, by providing a counterflow of the coolant and the calcined clay. However, this may require very expensive materials in the upstream end of the conduits. This can be avoided by parallel flow of the coolant and the calcined clay. In a preferred example, the coolant channel(s) has (have) two sections, a first upstream section and a second downstream section, wherein upstream and downstream references to the flow direction of the calcined clay. In other words, the upstream section is closer the to the clay inlet than the downstream section of the coolant channel and the downstream section of the coolant channel is closer to the downstream clay outlet. First, the cold coolant is provided to the upstream section, to thereby maintain the conduit wall below a given temperature. In the upstream section(s) of the coolant channel(s) the coolant may flow parallel or antiparallel to the calcined clay in the clay conduit. From an end of the upstream section, the preheated coolant may be provided to the downstream end of the second section. From there the coolant may flow towards an upstream end of the second portion of the coolant channel(s), i.e., in a counterflow with the calcined clay in the corresponding duct. This configuration may keep the upstream portion of the conduit wall sufficiently cold, while still providing for an increase of the recuperated exergy. As already apparent, upstream and downstream reference herein only to the conveying direction of the calcined clay.

For example, the calcined clay cooler may comprise a coolant cooler with a hot coolant inlet and a cold coolant outlet, wherein the coolant channel inlet is connected with the cold coolant outlet and the channel outlet is connected with the hot coolant inlet. The coolant cooler may be a heat exchanger being configured to withdraw heat from the coolant and to provide this heat to a heat carrier, e.g., a heat carrier fluid. The coolant cooler allows to keep the use of coolant low by cooling it down. Further, the recuperated heat may be used as process heat, e.g., to dry or preheat the raw clay and/or to (pre-) heat a steam boiler and/or to drive an ORC-process (Organic Rankine Cycle process). In short, the cooler can contribute to reduce $CO_2$ emissions as well as to reduce operating costs. Generalizing the coolant cooler may comprise a cold heat carrier fluid inlet and a hot heat carrier fluid outlet. The hot heat carrier fluid outlet of the coolant cooler may preferably be connected to a heat inlet of a heat sink by a hot heat carrier fluid conduit. Similarly, the cold heat carrier fluid inlet of the coolant cooler may preferably be connected to a cold heat carrier fluid outlet of the heat sink via a cold heat carrier fluid conduit. Examples of these heat sinks comprise, but are not limited to, raw meal dryers, boilers (e.g., steam boilers, ORC-boilers), district heating apparatus, combustion air preheaters, oxygen preheaters, chemical reactors, etc.

The coolant cooler may be omitted, as well: For example, the coolant may be air or another oxygen comprising fluid. The oxygen comprising fluid is heated up while passing the coolant channel and may subsequently be used as oxygen source for the calcined clay kiln or any other furnace or kiln to thereby increase efficiency of the corresponding plant. Only to avoid ambiguities, the calcined clay cooler may as well comprise a coolant cooler and at the same time an oxygen comprising fluid may be used as coolant. The oxygen comprising fluid may, but does not need to, be fed to a furnace or another reactor as oxygen source and the heat being transported by the oxygen comprising fluid can hence be used as process heat. In this example, at least one hot coolant line connects at least one coolant outlet of at least one coolant channel with a reactant inlet of a reactor for reacting at least a portion of the coolant. A vivid example for the reactor is a furnace, e.g., the clay furnace. In another example, a portion of the heated coolant may be cooled down in a coolant cooler and another portion may be provided to the furnace or another kind of reactor. In yet another example, at least a portion of the heated coolant may be cooled down in a coolant cooler and at least a portion of the cooled coolant may be provided from the coolant cooler's coolant outlet to the reactant inlet of the reactor (e.g., of the furnace). All these examples can be combined.

In a preferred example, one of the two connections is provided by the coolant line. For example, the cold coolant outlet may be connected with the at least one channel inlet via the coolant line. Alternatively, the hot coolant inlet may be connected with the at least one channel outlet via the coolant line.

If the calcined clay conduit comprises agitation means and/or conveying means extending from the inner side of the conduit wall into the conduit volume, cooling can be enhanced by mixing the calcined clay. Further, conveying of the calcined clay can be improved. For example, protrusions extending from the inner surface of the conduit wall into the conduit volume may agitate the calcined clay while the conduit rotates. By inclining a surface of the protrusion relative to the longitudinal direction of the conduit conveying may be controlled. For example, inclining the surface of the protrusion in the conveying direction may increase the flow of the calcined clay towards the clay outlet at a given rotational speed and horizontal orientation of the conduit, while inclining the surface of the protrusion against the direct conveying direction may reduce the average speed of the calcined clay towards the clay outlet. Both alternatives may be used to adapt the time the calcined clay is cooled in the cooler and hence the temperature it has at the clay outlet.

The calcined clay cooler may further comprise one (or more) support wheel(s) with at least one through hole. An example for a support wheel is a support disc, wherein the disc, different from its mathematical definition, shall imply a circular (preferably flat) structure with a finite thickness. The disc may have through holes or be reduced to spokes or the like.

The at least one channel wall and the at least one conduit wall may extend through the through-hole in the support wheel(s). At least the at least one channel wall may be radially supported by the support wheel. In a preferred example the calcined clay cooler has a number of support wheels. These are preferably spaced along the rotational axis. Each of the support wheels may contribute to maintain the conduit wall(s) and/or the channel wall(s) and/or the coolant line(s) in a predefined azimuthal position and in a predefined radial position relative to each other. In a simple example, the support wheel may be a disc with a number of through holes, wherein at least some of the through holes have rims that may support a conduit wall or a channel wall or the coolant line or any other part that extends along the rotational axis and shall rotate together with the clay conduit(s) around the rotational axis.

In case the calcined clay cooler comprises two or more support wheels a support wall may be attached to the at least two support wheels to enclose at least a portion of the rotating part of the calcined clay cooler. The support wall provides for additional stability, protects the coolant channel(s) and the clay conduit(s) from damage and enhances safety of workers present in the vicinity of the calcined clay cooler. Further, heat losses are further reduced.

The term connected implies a functional connection. For example, if an inlet of a first duct is connected to an outlet of a channel, the connection provides for a fluid communication. Each connection mentioned herein can be either a direct or an indirect connection. This means that "connected" can be replaced herein by "directly and or indirectly connected". Two pieces are in contact if they touch each other. For example, two plain bearing surfaces being in contact to each other allow for a translation of the corresponding parts. The term attachment indicates a mechanical fixation. To pieces are attached to each other if one is affixed to the other.

**Description of Drawings**

In the following the invention will be described by way of example, without limitation of the general inventive concept, on examples of embodiment with reference to the drawings.

Figure 1 shows a sketch of a calcined clay manufacturing line with a calcined clay cooler.

Figure 2 shows a side view of the rotating portion of the calcined clay cooler.

Figure 3 shows a partially sectioned view of the rotating portion of the calcined clay cooler.

Figure 4 shows a partially mounted rotating portion of the calcined clay cooler.

Figure 5 shows a cross sectional view of the cooler along section plane C-C in Figure 2.

Figure 6 shows a cross sectional view of the cooler along section plane B-B in Figure 2.

Figure 7 shows a detail of a calcined clay conduit in a sectional view.

Figure 8 shows another detail of a calcined clay conduit in a sectional view.

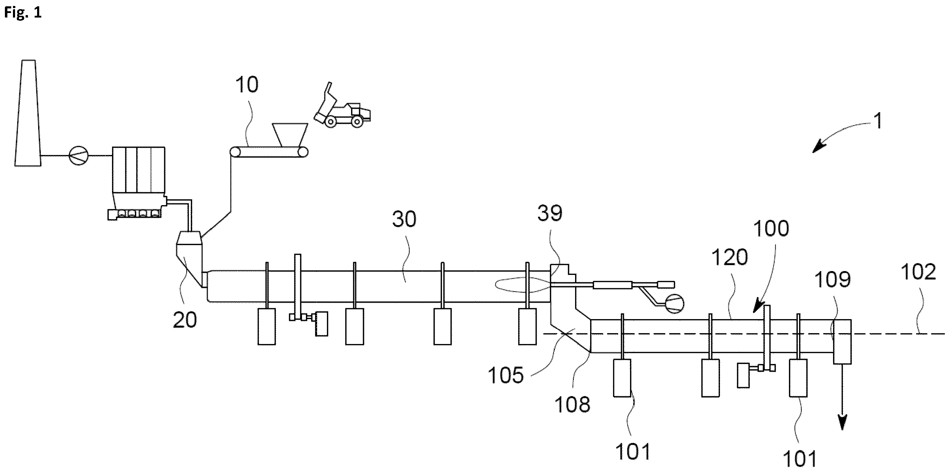

FIG. 1 shows a calcined clay manufacturing line. Clay is provided to a clay preprocessing station 10 e.g., by trucks or any other conveying means. In the preprocessing station 10 the clay maybe ground, blended and/or dried. From the clay preprocessing station 10 the preprocessed clay is provided via an optional preheater 20 to a rotary kiln 30 or another heating device for heating the clay up to a predefined temperature. The kiln outlet 39 (more generally the heating device's outlet) is connected to the upper end of a connection chute 105. Via the connection chute 105, calcined clay may be provided to an inlet section 110 of a calcined clay cooler 100. In the calcined clay cooler 100, the calcined clay is cooled down while in turn heating a coolant up. An example coolant may be water, but other coolants may be used as well. The heated coolant may be provided to a coolant cooler to cool the coolant down again and to thereby recuperate the heat previously withdrawn from the calcined clay. For example, this heat may be used for example in the preprocessing station 10, e.g., for drying the raw clay and/or in the preheater 20 and/or a power plant. As can be seen in Fig. 1, the calcined clay cooler 100 may have a static portion 101 rotatably supporting a rotating portion 120.

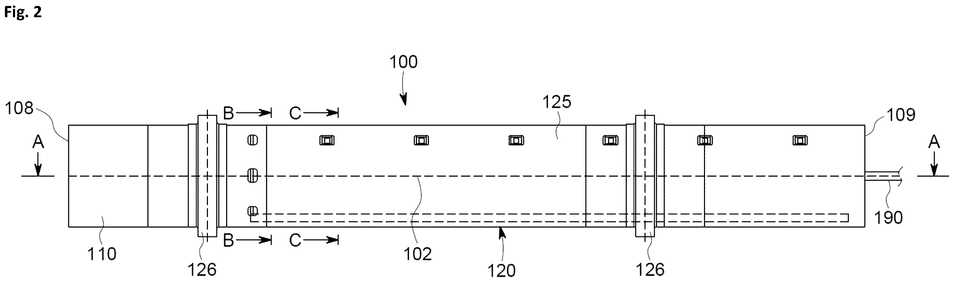

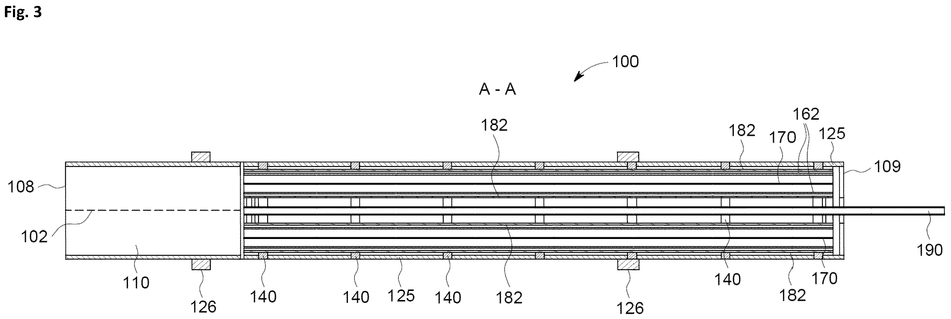

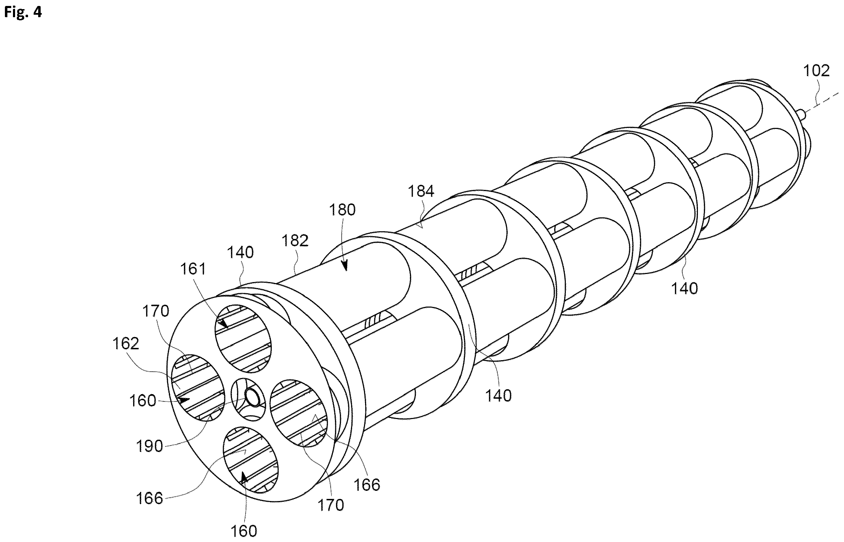

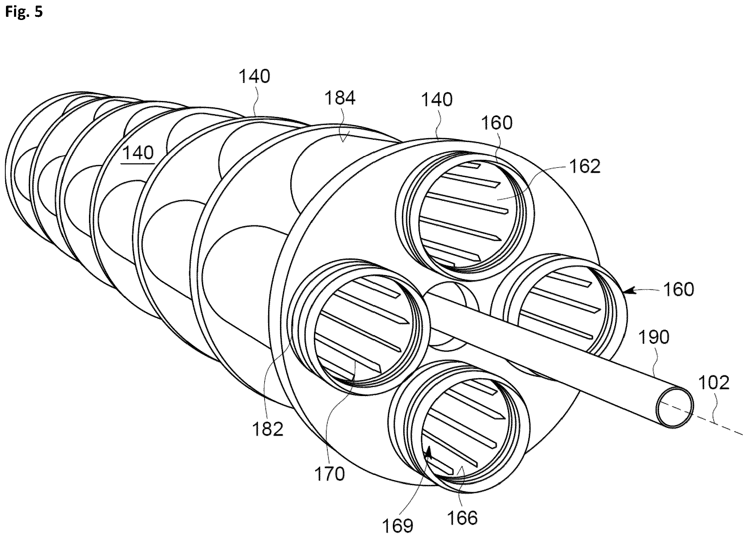

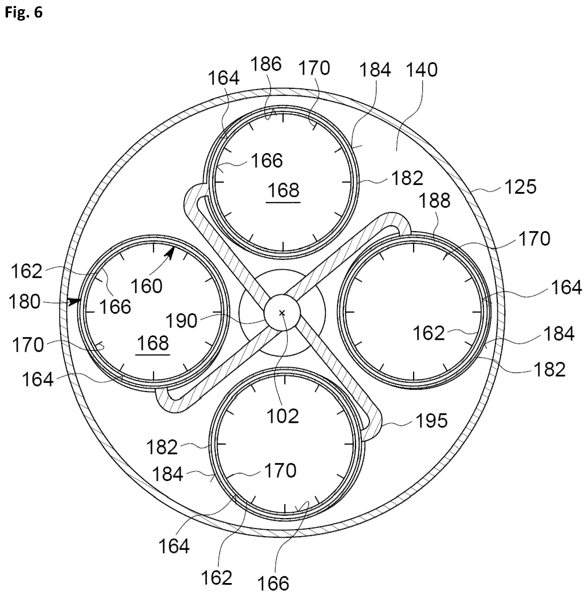

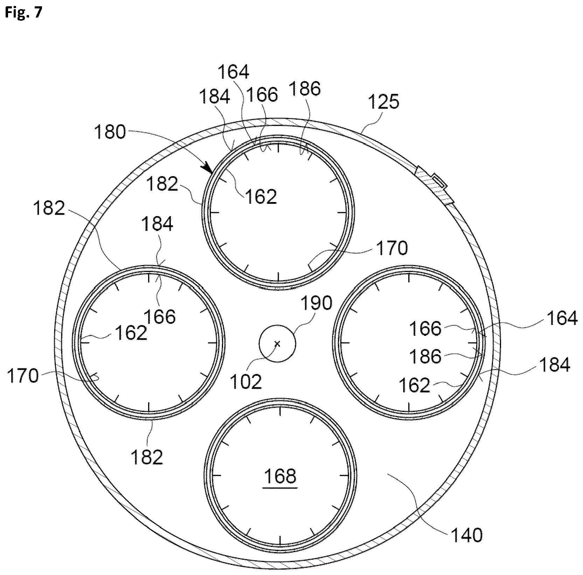

As can be seen in FIG. 2 and 3, the rotating portion 120 may have support walls 125. On the support wall 125 may be at least one support ring 126 with a rotationally invariant peripheral surface. These support rings 126 may as well be referred to as tire rings 126 or simply as tire 126. The tires 126 are for rotatably supporting the rotating portion 120, e.g., on rollers of the static portion 101. The rotational axis is indicated by reference numeral 102. Inside the support wall 125 are preferably a number of support wheels 140 being spaced along the longitudinal axis 102 (cf. FIG. 4). The numbef126r may be only one (1) but may as well be bigger, depending on the size of the calcined clay cooler. The support wheels 140 may have through holes being delimited by rims, i.e., by a surface delimiting the corresponding through hole. These rims may support a number of n clay conduits 160 with a conduit wall 162 (shown are n = 4 clay conduits 160, but other numbers are possible as well). Each conduit wall 162 encloses a separate conduit volume 168 (see FIG. 6 and 7). As apparent from Fig. 3 to 7, the conduits 160 are arranged symmetrically with respect to the rotational axis 102. In the example, there are four conduits 160 (n = 4). The centers of the conduits 160 are spaced by

$$\frac{2\pi}{4} = \frac{\pi}{2} = 90°$$

, and hence a rotation of the conduits by $\frac{\pi}{2}$ maps the centers of a conduit on the center of the neighbored conduit. In the example, the conduits 160 have at least essentially the same shape and hence each rotation by $\frac{\pi}{2}$ maps the contours of the conduit walls 162 onto each other. At this point it is noted that the number n of conduits 160 is only an example and may be altered as set out above. In this case, the azimuthal offset between the centers of the conduits is preferably adapted accordingly. Again, it is noted, that in practice deviations from a perfect discrete rotationally symmetric azimuthal spacing of the conduits 160 may have to be accepted as indicated above. In the depicted example, the centers of the clay conduits 160 have the same radial distance to the rotational axis, but again, it is noted that this is only a preferred example.

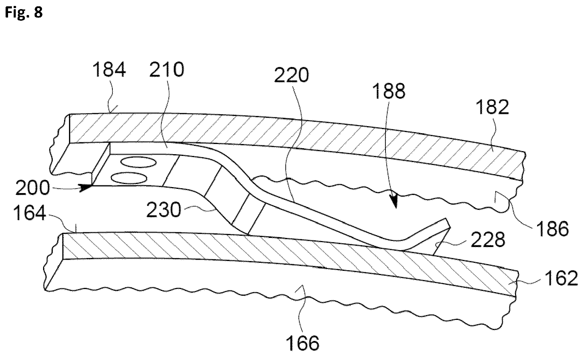

In the present example, each clay conduit 160 has a coolant channel 180 with a channel wall 182 surrounding the conduit wall 162 (see detail in FIG. 6 to 8). The space between the peripheral surface 164 of the conduit wall and the inner surface 186 of the channel wall 182 is a coolant channel volume 188 (see FIG. 8) through which the coolant may flow from a channel inlet to a channel outlet. Protrusions 170 may extend inwardly from the inner surface 164 of the conduit wall 162. In operation, the optional protrusions 170 improve the heat transfer from the hot calcined clay to the conduit wall 162 and at the same time agitate the calcined clay. In Fig. 3 only a single optional protrusion 170 per clay conduit is shown to declutter the figure. Any other number is possible as well.

As can be seen in FIGs. 1 to 7, a coolant line 190 may extend along the rotational axis (102) and may be connected for example by connection pipes 195 to coolant inlets of the coolant channels 180 (see FIG. 6). From there, the coolant may flow parallel to the effective conveying direction of the calcined clay to the downstream end 109 (see FIGs. 2 and 3) of the calcined clay cooler 100. From the downstream end 109 it may flow to a coolant cooler and after being cooled down, back into the coolant line 190.

FIG. 8 shows a detail of a clay conduit 160 with a conduit wall 162 being surrounded by a channel wall 182. Attached to an inner surface 186 of the channel wall 182 may be a first leg 210 of a profile 200. The optional profile 200 may comprise said first leg 210 and a second leg 220 with a middle leg 230 in between of the first leg 210 and the second leg 220. A plain bearing surface 228 of the second leg 220 may contact the peripheral surface 164 of the conduit wall 162 and hence support the conduit wall 162. The profile 200 may thus support the conduit wall radially, while providing a linear plain bearing enabling the conduit wall 162 and channel wall 182 to expand differently in the axial direction. In addition, the profile 200 by its elasticity may as well compensate for different radial expansions or contractions of the conduit wall 162 and channel wall 182, which may occur when ramping a calcined clay plant up or shutting the calcined clay plant down, respectively. The peripheral surface 164 of the conduit wall 162 may have at least one block attached to it that limit an axial movement of the plain bearing surface 228 e.g., in the azimuthal direction and/or in the axial direction. In another example, the first leg 210 may be attached to the peripheral surface 164 of the conduit wall 162 and the second leg's plain bearing surface may anti-radially support the channel wall 182. As shown in FIG. 8, the longitudinal extension of the first leg 210 and/or the of the second leg 220 may be essentially parallel to the azimuthal direction (with respect to the conduit axis). Alternatively, at least one of the first leg 210 and the second leg 220 may have a longitudinal direction being at least essentially parallel (including antiparallel) to the longitudinal axis and/or the rotational axis.

**List of reference numerals**

| 1 | calcined clay plant |
|---|---|
| 10 | preprocessing station (optional) |
| 20 | preheater (optional) |
| 30 | calcined clay heater, e.g. rotary kiln (optional) |
| 39 | calcined clay heater outlet, e.g. rotary kiln outlet (optional) |
| 100 | calcined clay cooler |
| 101 | static portion (optional) |
| 102 | rotational axis |
| 105 | connection chute (optional) |
| 108 | upstream end of calcined clay cooler |
| 109 | downstream end of calcined clay cooler |
| 110 | inlet section (optional) |
| 120 | rotatably supported portion / rotating portion |
| 125 | support wall / support shell (optional) |
| 126 | support rings/ tire rings / tires |
| 140 | support wheel (optional) |
| 160 | clay conduit |
| 161 | clay inlet of clay conduit |
| 162 | conduit wall |
| 164 | peripheral surface conduit wall |
| 166 | inner surface of conduit wall |
| 168 | conduit volume |
| 169 | clay outlet of clay conduit |
| 170 | protrusions / agitation means (optional) |
| 180 | coolant channel (optional) |
| 182 | channel wall(optional) |
| 186 | inner surface of channel wall |
| 188 | coolant channel volume |
| 190 | coolant line (optional) |
| 195 | connection pipe (optional) |
| 200 | support profile (optional) |
| 210 | first leg (optional) |
| 220 | second leg (optional) |
| 228 | plain bearing surface (optional) |
| 230 | middle leg (optional) |

**Claims**

1. A calcined clay cooler (100) with an axis of rotation (102) and at least one clay conduit (160), wherein

   - each of the at least one clay conduits (160) has a clay conduit wall (162),
   - each of the clay conduit walls (162) encloses a clay conduit volume (168),
   - each of the clay conduit volumes (168) has an upstream clay inlet (161) and a downstream clay outlet (169),
   - each of the at least one clay conduits (160) is rotatably supported to rotate relative to the axis of rotation (102),

   **characterized in, that**
   each of the clay conduit walls (162) comprises at least one coolant channel (180) with a channel wall (182) enclosing a channel volume (188) and defining a channel inlet (181) and a channel outlet.

2. The calcined clay cooler (100) of claim 1, **characterized in, that** the at least one clay conduit (160) is and/or comprises at least two clay conduits (160), being arranged symmetrically with respect to the rotational axis (102).

3. The calcined clay cooler (100) of claim 1 or 2, **characterized in that** the calcined clay cooler (100) further comprises an inlet section (110), wherein the inlet section (110) comprises an inlet duct with a duct inlet and a number of duct outlets, wherein the number of duct outlets corresponds to the number of clay conduits and **in that** the duct outlets are each connected to the clay inlet of the corresponding clay conduit.

4. The calcined clay cooler (100) of the previous claim, **characterized in that** the calcined clay cooler (100) further comprises a connection chute (105) with a connection chute end and **in that** the connection chute end extends into the inlet duct, thereby defining a ring gap between the connection chute and the inlet duct.

5. The calcined clay cooler (100) of one of the previous claims, **characterized in that** the coolant channel volume (188) is limited by the clay conduit wall (162) and by the coolant channel wall (182), wherein the channel wall (182) encloses at least a portion of the clay conduit wall (162).

6. The calcined clay cooler (100) of the previous claim, **characterized in that** the channel wall (182) supports the conduit wall (162) radially and anti-radially and floatingly in the axial direction.

7. The calcined clay cooler (100) of one of the previous claims, **characterized in that** it further comprises at least one support profile (200) with a first leg (210), a middle leg (230) and a second leg (220), wherein

    - the middle leg (230) is in between of the first leg (210) and second leg (220) and defines an offset between the first leg (210) and the second leg (220),
    - the first leg (210) is attached to a peripheral surface (164) of the conduit wall (162) or to an inner surface (186) of the channel wall (182) and **in that** the second leg (220) has a plain bearing surface (228) contacting the respective other of the peripheral surface (164) of the conduit wall (162) or to an inner surface (186) of the channel wall (182), and
    - the offset is measured radially with respect a longitudinal axis of a conduit axis defined by the conduit wall (182).

8. The calcined clay cooler (100) of the previous claim, **characterized in that** at least one of the at least one first legs (210) is attached by welding, brazing, riveting, gluing or is unitary with the wall (162, 182) to which it is attached.

9. The calcined clay cooler of one of the previous claims, **characterized in that** it further comprises a coolant line (190), wherein the coolant line (190) extends along the rotational axis (102) and/or has a connection port in the downstream half of the calcined clay cooler (100) and/or is fluidly connected with the upstream end of the at least one coolant channel (180).

10. The calcined clay cooler (100) of one of the previous claims, **characterized in that** the calcined clay cooler (100) comprises a coolant cooler with a hot coolant inlet and a cold coolant outlet, wherein the channel inlet (181) is connected with the cold coolant outlet and the channel outlet is connected with the hot coolant inlet.

11. The calcined clay cooler (100) of the previous claim **characterized in that** the coolant cooler comprises a cold heat carrier fluid inlet and a hot heat carrier fluid outlet and **in that** the hot heat carrier fluid outlet of the coolant cooler is connected to a heat inlet of a heat sink by a hot heat carrier fluid conduit and **in that** the cold heat carrier fluid inlet of the coolant cooler is connected to a cold heat carrier fluid outlet of the heat sink via a cold heat carrier fluid conduit.

12. The calcined clay cooler (100) of claim 10 or 11, **characterized in that** the cold coolant outlet is connected with the at least one channel inlet (181) via the coolant line (190) and/or **in that** the hot coolant inlet is connected with the at least one channel outlet via the coolant line (190).

13. The calcined clay cooler (100) of one of the previous claims, **characterized in that** the clay conduit (160) comprises agitation means and/or conveying means extending from the inner surface (166) of the conduit wall (162) into the conduit volume (168).

14. The calcined clay cooler (100) of one of the previous claims, **characterized in that** the calcined clay cooler (100) further comprises a support wheel (140), and **in that** the at least one channel wall (182) and the at least one conduit wall (162) extend through through-holes in the support wheel (140), wherein at least the at least one of the channel walls (182) and/or the conduit walls (162) is radially supported by the support wheel (140).

15. The calcined clay cooler (100) of claim 14, **characterized in that** the calcined clay cooler (100) comprises at least two support wheels (140), and **in that** a support wall (125) is attached to the at least two support wheels (140).

Fig. 1

**Fig. 2**

**Fig. 3**

Fig. 4

**Fig. 5**

**Fig. 6**

**Fig. 7**

**Fig. 8**

EP 4 325 152 A1

Europäisches
Patentamt
European
Patent Office
Office européen
des brevets

# EUROPEAN SEARCH REPORT

Application Number

EP 22 19 1273

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2016 007221 A1 (ALLGAIER WERKE GMBH [DE]) 14 December 2017 (2017-12-14) * figures 1,2 * * claims 1-18 * * paragraph [0057] * ----- | 1-15 | INV. F27B7/38 C04B7/47 F27D15/02 |

|  |  |  | TECHNICAL FIELDS SEARCHED (IPC) |
|---|---|---|---|
|  |  |  | F27B F27D C04B F28D |

The present search report has been drawn up for all claims

| Place of search | Date of completion of the search | Examiner |
|---|---|---|
| The Hague | 3 February 2023 | Peis, Stefano |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.......................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 19 1273

03-02-2023

| Patent document cited in search report | Publication date | Patent family member(s) | | Publication date |
|---|---|---|---|---|
| DE 102016007221 A1 | 14-12-2017 | CA | 3026581 A1 | 21-12-2017 |
| | | DE | 102016007221 A1 | 14-12-2017 |
| | | EP | 3469281 A1 | 17-04-2019 |
| | | ES | 2830399 T3 | 03-06-2021 |
| | | MA | 45230 B1 | 28-10-2020 |
| | | US | 2019186835 A1 | 20-06-2019 |
| | | WO | 2017215784 A1 | 21-12-2017 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RODRIGO FERNANDEZ ; FERNANDO MARTIRENA ; KAREN L. SCRIVENER.** The origin of the pozzolanic activity of calcined clay minerals: A comparison between kaolinite, illite and montmorillonite. *Cement and Concrete Research,* 2011, vol. 41, 113-122

- Reactivity of Calcined Clays. **TOBIAS DANNER.** PhD-Thesis. Trondheim University, 2013
- **LUIZ FELIPE DE PINHO ; ROBERTO CAMPOS.** Claying it all on the line. *World Cement,* 2021, vol. 4, 35-38